Europäisches Patentamt

European Patent Office

Office européen des brevets

(19)

(11) Veröffentlichungsnummer: **0 339 446**
**A2**

(12) **EUROPÄISCHE PATENTANMELDUNG**

(21) Anmeldenummer: **89106973.4**

(22) Anmeldetag: **19.04.89**

(51) Int. Cl.⁴: **H02J 7/10 , H01M 10/44**

(30) Priorität: **23.04.88 DE 3813823**

(43) Veröffentlichungstag der Anmeldung:
**02.11.89 Patentblatt 89/44**

(84) Benannte Vertragsstaaten:
**AT BE DE ES FR GB IT SE**

(71) Anmelder: **ACCUMULATORENFABRIK SONNENSCHEIN GMBH**
**Thiergarten Postfach 1180**
**D-6470 Büdingen 1 Oberhessen(DE)**

(72) Erfinder: **Miltenberger, Gerhard**
**Friedrich Ebert Strasse 14**
**D-6477 Limeshain(DE)**

(74) Vertreter: **Baumann, Eduard, Dipl.-Phys.**
**Postfach 1201 Sattlerstrasse 1**
**D-8011 Höhenkirchen/München(DE)**

(54) **Verfahren zum Laden von Bleiakkumulatoren.**

(57) Die Erfindung bezieht sich auf ein Verfahren zum Laden von dichtverschlossenen, wartungsfreien Akkumulatoren, vorzugsweise Bleiakkumulatoren, mit thixotropem Gel als Elektrolyt, wobei Ladephasen mit konstantem Strom und konstanter Spannung abwechseln. Dadurch wird die Rekombinationsrate von Sauerstoff zu Wasser so erhöht, daß die noch auftretenden Wasserverluste nicht die Lebensdauer der Batterie begrenzen.

EP 0 339 446 A2

## Verfahren zum Laden von dichtverschlossenen wartungsfreien Akkumulatoren

Die Erfindung bezieht sich auf ein Verfahren gemäß dem Oberbegriff des Anspruches 1.

Bisher gibt es für dichtverschlossene wartungsfreie Akkumulatoren, für Traktionsanwendungen vorzugsweise Bleiakkumulatoren, mit thixotropem Gel als Elektrolyt keine zufriedenstellenden Ladeverfahren. Hierdurch können die großen Vorteile dieser Akkumulatoren nur zum Teil ausgenützt werden. So liegt beispielsweise die Zyklenfestigkeit deutlich unter der theoretisch erreichbaren und unterhalb der beispielsweise für Traktions-Akkumulatoren vorgeschriebenen Anzahl von 1500 Lade-Entladezyklen.

Bei einem bekannten Ladeverfahren wird die Spannung konstant gehalten. Bei wiederholten Ladungen führt dies jedoch zu einem allmählich starken Absinken der Kapazität. Bei einem weiteren bekannten Ladeverfahren wird der Ladestrom konstant gehalten. Dies führt jedoch zu einer derart starken Zersetzung des Elektrolyten, daß ein Nachfüllen von Wasser erforderlich wäre, was bei mit Gel betriebenen und dichtverschlossenen Akkumulatoren jedoch nicht möglich ist.

Probleme der Aufladung wartungsfreier Batterien sind u.a. im Forschungsbericht T83-150, G. Miltenberger, Fachinformations-Zentrum Karlsruhe, 7514 Eggenstein-Leopoldshafen 2, Seiten 68 ff beschrieben.

Die CH-PS 391807, Otto Jache, und die DE-PS 1194015, Otto Jache, befassen sich mit einem wartungsfreien Akkumulator, bei dem eine zu starke Gasentwicklung beim Laden des Akkumulators durch Abschaltung bzw. Begrenzung des Ladestromes unterbrochen wird.

Aus der DE-PS 3315923, Harry Gaus, ist ein Ladegerät für Batterien bekannt, ohne daß auf die spezielle Problematik von wartungsfreien Batterien mit thixotropem Gel eingegangen wird. Die Ladung erfolgt nach einer IWIUI-Kennlinie und bei einer bestimmten Anordnung der Transformatoren, der Thyristoren und der Dioden innen an den Außenwänden des Gehäuses des Ladegerätes. Unter W-Phase ist dabei eine Ladung mit konstantem Widerstand zu verstehen.

Eine Ursache für die Ladeprobleme dicht verschlossener wartungsfreier Akkumulatoren unter Verwendung eines thixotropen Gels als Elektrolyt liegt im wesentlichen darin, daß der Aufbau derartiger Batterien weitgehend die Rekombination des beim Aufladen an der positiven Elektrode entstehenden Sauerstoffes ermöglichen muß, insbesondere bei den erwünschten höheren Ladespannungen.

Der Erfindung liegt das Problem zugrunde, ein Verfahren gemäß dem Oberbegriff des Anspruches 1 so auszugestalten, daß die Rekombinationsrate des Sauerstoffes zu Wasser während des Ladevorganges so hoch ist, daß die noch auftretenden Wasserverluste nicht die Lebensdauer des Akkumulators begrenzen.

Das Problem wird erfindungsgemäß durch die Merkmale des Kennzeichens des Anspruches 1 gelöst. Weitere Ausgestaltungen der Erfindung sind in den Unteransprüchen unter Schutz gestellt.

Beim Erfindungsgegenstand werden im Gelelektrolyt, der ja in der Regel eine geschlossene Masse bildet, Verbindungsleitungen zwischen positiver und negativer Elektrode erzeugt.

Die Verbindungsleitungen zwischen positiver und negativer Elektrode sollen vorzugsweise auf elektrischem Wege erzeugt werden, nämlich durch bestimmte Lade- und Entladezyklen. Überraschenderweise zeigte sich nämlich, daß dadurch Risse innerhalb des Elektrolyts entstehen, die die gewünschten Verbindungsleitungen bilden.

Als bevorzugter nachfolgender Ladezyklus hat sich die Kombination eines ersten Konstantstrom-Zyklus mit einem Konstant-Spannungszyklus herausgestellt, der von einem zweiten Konstantstrom-Zyklus gefolgt ist. Der erste Konstantstromzyklus kann dabei etwa eine bis fünf Stunden, der Konstantspannungszyklus kann etwa weitere vier Stunden, und der zweite Konstantstrom-Zyklus kann etwa drei Stunden betragen. Die Zellenspannung während des ersten Konstantstrom-Zyklus kann hierbei von etwa zwei Volt auf etwa 2,3 Volt ansteigen, beim zweiten Konstantstrom- Zyklus von 2,3 Volt auf 2,7 Volt.

Nach dem Abschalten des Ladegerätes fällt dann die Zellenspannung rasch auf die Sollspannung von etwa 2,15 Volt ab.

Die Dauer der beiden Konstantstromphasen sowie der dazwischenliegenden Konstantspannungsphase hängt selbtverständlich vom Batterietyp ab, die angegebenen Werte, insbesondere die sich daraus ergebenden Mittelwerte, sind typisch für einen Bleiakkumulator mit thixotropem Gel und Schwefelsäure. Wesentlich ist die Steuerung der drei Phasen durch bestimmte Meßwerte. So steigt zunächst die Zellenspannung nach dem Anlegen des Ladegerätes und konstantem Strom innerhalb 20 bis 30 Minuten steil, dann allmählich an. Nach Erreichen der Zell-Nennspannung, im Falle von Bleiakkumulatoren etwa 2.35 Volt, am ersten Umschaltpunkt (S1) wird die zweite Ladungsphase eingeleitet, bei der die Ladespannung konstant gehalten wird. Während dieser zweiten Phase sinkt der Ladestrom kontinuierlich, beispielsweise von 38 Ampere, auf einen unteren Grenzwert von etwa 2,5 Ampere ab.

Während diese Werte für einen ganz bestimmten Batterietyp gelten, kann dieser Wert mit dem sogenannten 5-stündigen Nennstrom I₅ weitgehend vom Batterietyp unabhängig ausgedrückt werden, sodaß sich untere Grenzwerte von (0,02-0,1) x J₅ ergeben. Gemäß DIN 40729 wird mit I₅ der 5-stündige Entladestrom bezeichnet, der einer 5-stündigen Kapazität zugeordnet ist. Es handelt sich um den Konstant-Strom, mit dem eine Batterie in 5 Stunden entladen ist. In Anlehnung daran wird hier der 5-stündige Nennstrom ebenfalls mit I₅ bezeichnet. Hierbei handelt es sich um den Konstant-Ladestrom, der wertmäßig dem vorher definierten Entladestrom entspricht. Dann wird auf die zweite Konstantstromphase bei diesem unteren Stromwert (0,06 x J5) und dem zweiten Umschaltpunkt (s2) umgeschaltet. Während dieser Zeit steigt die Zellenspannung von der Konstant- Ladespannung von etwa 2,35 Volt zunächst innerhalb weniger Minuten steil und dann innerhalb etwa 2 Stunden bis zu einem oberen, nicht überschreitbaren Grenzwert von etwa 2,7 Volt an. Beim Abschalten des Ladegerätes sinkt dann die Zellenspannung auf eine Nennspannung von etwa 2,15 Volt ab.

Durch dieses Ladeverfahren konnte man überraschenderweise die Qualität und die Lebensdauer, insbesondere die Zyklenfestigkeit, erheblich erhöhen, so daß die praktischen Werte den hohen theoretischen Werten derartiger wartungsfreier Akkumulatoren, insbesondere Bleiakkumulatoren, angenähert werden konnten.

Ein Ausführungsbeispiel der Erfindung ist in der Zeichnung dargestellt.

Es zeigt:

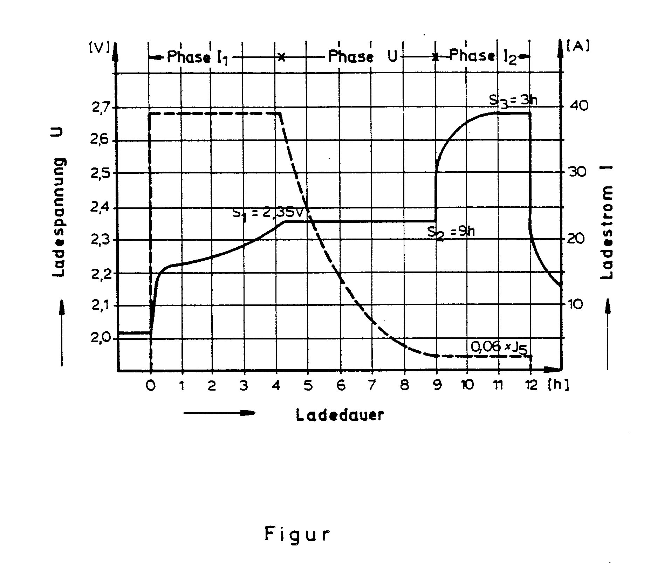

Fig. 1 eine typische IUI_a-Ladekennlinie.

Bei dieser Kennlinie sind in der Ordinate die Zellenspannungen in V bzw. die Ströme in A, in der Abszisse die Ladezeiten in Stunden (h) aufgetragen. Die Kurve ist in einem ersten Konstantstromzyklus bei ansteigender Spannung, einem Konstantspannungszyklus und einen zweiten Konstantstromzyklus mit ziemlich steil ansteigender und schließlich zu einem Grenzwert mündender Zellenspannung unterteilt. Nach dem Ausschalten des Ladegerätes fällt die Spannung ab, wobei der letzte Teil langsamer abfällt und in die Zell- Ruhespannung mündet.

**Ansprüche**

1. Verfahren zum Laden von dichtverschlossenen, wartungsfreien Akkumulatoren, vorzugsweise Bleiakkumulatoren, mit thixotropem Gel als Elektrolyt, dadurch gekennzeichnet, daß sich Ladephasen mit konstantem Strom und konstanter Spannung abwechseln, bis die gewünschte Sollspannung erreicht wird.

2. Verfahren nach Anspruch 1, dadurch gekennzeichnet, daß der Ladezyklus ein Strom-Spannungs-Strom (IUI)-Zyklus ist, bei dem zunächst der Strom (I₁) bis zum Erreichen einer bestimmten Zellenspannung, dann die Spannung (U) bis zum Erreichen eines bestimmten unteren Strom-Grenzwertes, und dann wiederum der Strom (I₂) bis zum Erreichen eines oberen Grenzwertes der Zellspannung konstant gehalten wird.

3. Verfahren nach Anspruch 1 oder 2, dadurch gekennzeichnet, daß die Dauer des ersten Konstantstrom- Zyklus eine bis fünf Stunden, vorzugsweise drei bis viereinhalb Stunden, beträgt, wobei der Zellen- Stromfluß je nach Akkumulatortyp zwischen dem 0,5fachen und dem 1,5 fachen Nennstrom (I₅) liegt, und wobei die Zellenspannung von einem Ruhestrom von etwa 1,9 -2,1 Volt auf etwa 2,3 Volt - 2,5 Volt ansteigt,

daß sich danach ein Konstantspannungszyklus mit einer konstanten Zellenspannung zwischen etwa 2,3 Volt und 2,5 Volt für eine Zeitdauer zwischen zwei und sieben, vorzugsweise 3-5 Stunden anschließt, wobei der Strom (I) auf Werte zwischen dem 0,02fachen und dem 0,1fachen Nennstrom (I₅) fällt,

und daß sich daran schließlich ein zweiter Konstantstrom- Zyklus für eine Zeitdauer von einer bis fünf, vorzugsweise zwei bis vier Stunden, anschließt, wobei der Wert des Stromes (I₂) in einem Bereich zwischen dem 0,02fachen und dem 0,1fachen des Nennstromes (I₅) konstant gehalten wird, und wobei die Zellenspannung (V) von etwa 2,2-2,5 bis auf einen Grenzwert von etwa 2,6-2,8 Volt ansteigt.

4. Verfahren nach einem der Ansprüche 1-3, dadurch gekennzeichnet, daß die Ladung nach einer IUI_a- Kennlinie erfolgt, bei der der Akkumulator bzw. die einzelne Zelle in jedem Zyklus voll aufgeladen wird, und daß zur Verminderung irreversibler Wasserzersetzung die Dauer der zweiten Konstantstrom- Phase durch den Entladezustand des Akkumulators, der über die Zeitmessung bis zum Erreichen des zweiten Konstantstromzyklus festgestellt wird, gesteuert wird.

Figur